# EUROPÄISCHE PATENTSCHRIFT

(11) **EP 0 847 943 B1**
(45) Veröffentlichungstag und Bekanntmachung des Hinweises auf die Patenterteilung: **17.07.2002**
(21) Anmeldenummer: 97810959.3
(22) Anmeldetag: 10.12.1997
(51) Int. Cl.: B65G 47/57, B65G 47/50, B65G 1/04

(54) **Vollautomatischer Warenaufzug**
Fully automatic goods lift
Ascenseur de transport de marchandises, totalement automatisé

(30) Priorität: 12.12.1996 CH 305296
(43) Veröffentlichungstag der Anmeldung: 17.06.1998
(73) Patentinhaber: Company for Technology Transfer and Patents/Sark-Kistner, 6841 Mäder (AT)
(72) Erfinder: Sark, Werner, 1736 St. Silvester (CH)

(56) Entgegenhaltungen:
- EP-A- 0 654 425
- DE-A- 3 714 638
- DE-A- 4 342 083
- DE-U- 9 103 197

## Beschreibung

Die Erfindung setzt sich zum Ziel, das automatische Verteilen von Waren, Gütern, (zum Beispiel, Briefen, Paketen) usw. in einem Gebäude von einer oder mehreren zentralen Stellen aus, auf die einzelnen Stockwerke und das Einsammeln und Zuführen an eine oder mehrere zentrale Sammelstellen von Gütern, Waren usw. zur Weiterleitung.

Bekannt ist ein Aufzug mit einer Kabine mit eigenem Antrieb in einem Schacht, zur Verteilung von Waren und Gütern mit oder ohne Personenbegleitung in einem Gebäude. Pro Person wird meist nur ein Behälter, sofern schwer, mit Hilfe des Aufzuges im Gebäude verteilt. Dieses Vorgehen bedingt einen grossen Personalaufwand zeitlich stark beanspruchte Aufzüge mit den entsprechend unproduktiven Wartezeiten bei den Aufzügen und damit auch dementsprechende Personalkosten. Dies können vollautomatische Kleinwarenaufzüge mit automatischer Be- und Entladung der Behälter mit Zielcodierung verhindern, haben aber nur beschränkten Platz in der Kabine.

An einer Posteingangsstelle wird zum Beispiel die eingehende Post mit entsprechend codierbaren Behältern mit einem vollaumatischen Kleinwarenaufzug im ganzen Gebäude verteilt und umgekehrt wird die abgehende Post wieder eingesammelt und einer zentralen Sammelstelle zugeführt.

Die Nachteile des Standes der Technik Nerden durch die in Anspruch 1 definierte Erfindung behoben.
Bevorzugte Ausbildungen der Erfindung sind Gegenstand der Unteransprüche.

Die Erfindung ermöglicht, dass mehrere Behälter mit Ihrer Zielcodierung auf die Beladeförderbahn gestellt und dann von dieser Förderbahn bis zur Beladeposition vor dem Schachtzugang gebracht werden. Eine Fotozelle meldet nun der Aufzugssteuerung die Anwesenheit dieser Behälter. Diese Steuerung veranlasst nun über den Hauptantrieb des Aufzuges, das diese Behälter abgeholt werden. Der Förderrahmen (mit den Kabinen) wird in Beladeposition gebracht, die automatischen Türen öffnen sich, und die Behälter werden eingeladen. Die Zielcodierung kann bereits vor dem Schacht oder sonst in der Kabine gelesen werden. Diese Informationen werden der Aufzugssteuerung mitgeteilt, die Türen schliessen sich und die Behälter werden an Ihre Zielhaltestellen befördert, die automatischen Türen öffnen sich und der/die Behälter werden auf die Entladebahn ausgeladen. Sofern auf der Beladebahn dieser Haltestelle sich weitere Behälter mit ihren Zielcodierungen befinden, werden diese eingeladen und an ihre Zielhaltestellen gebracht, usw. Dies ermöglicht ein schnelles verteilen und einsammeln von Behältern.

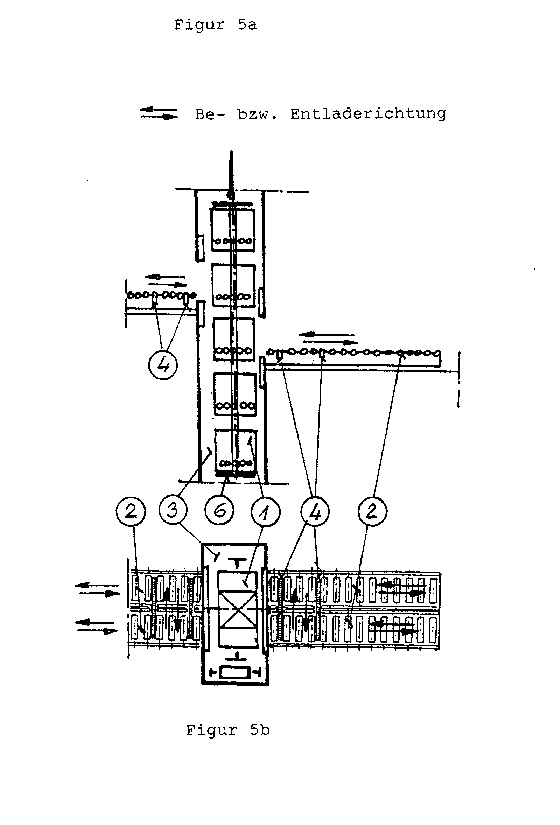

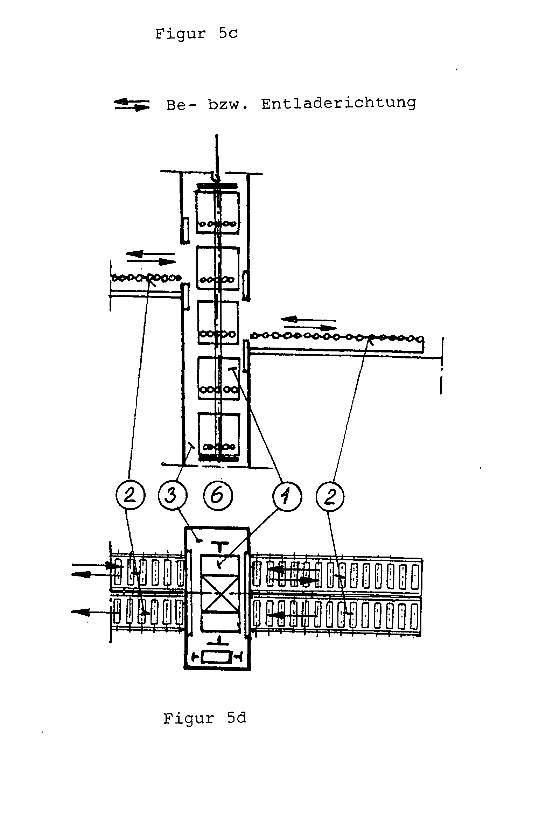

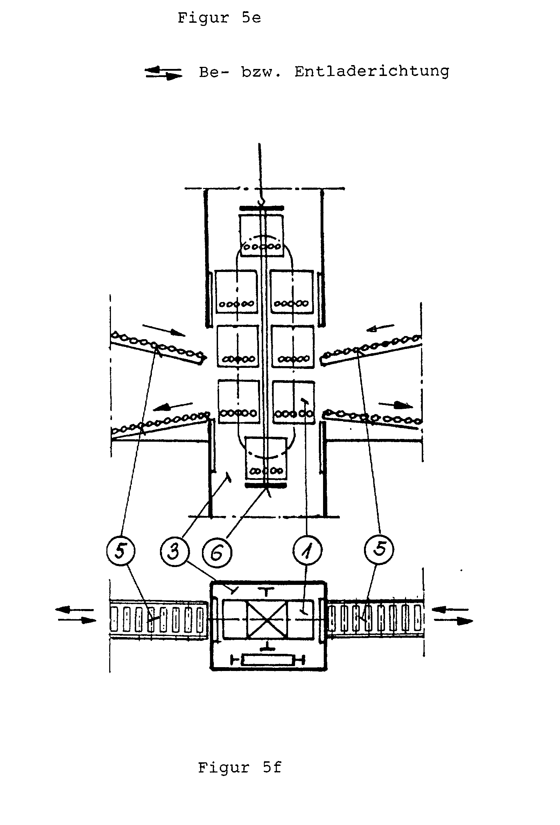

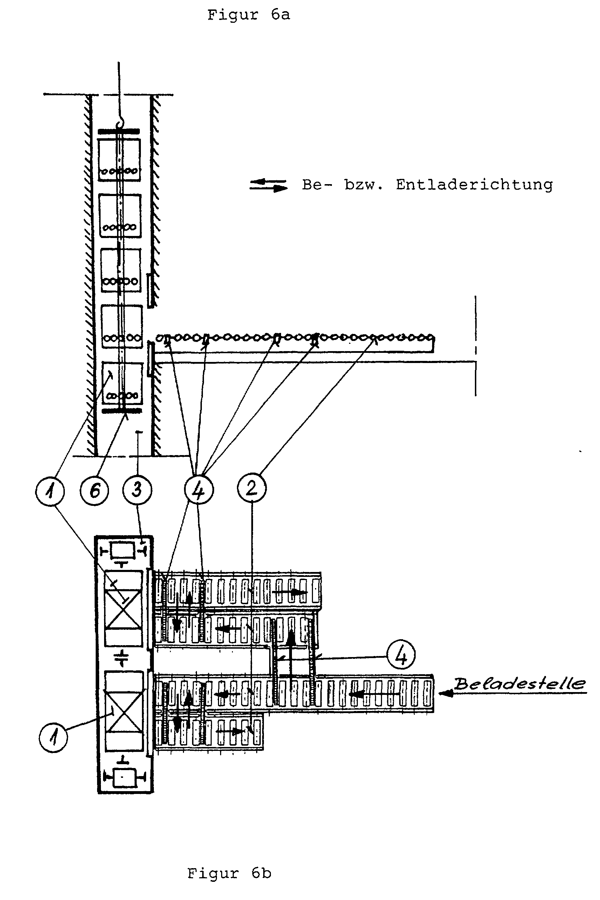

Beschreibung eines vollautomatischen Warenaufzug zur optimalen Ausnützung des Schachtes zum automatischen verteilen und einsammeln von Gütern und Waren usw. in einem Gebäude,
bestehend aus:
- Warenaufzug mit automatischen Schacht- und nach Bedarf Förderrahmenabschlusstüren oder getrennte Abschlusstüren pro Kabine wie Schiebetüren, Rolladen, Gliedertüren, Vertikalschiebetüren, Drehtüren usw.
- Förderbahnen in der Kabine und vor den Schachtzugängen können sein:
   - Angetriebene Förderbahnen (Antrieb in beide Drehrichtungen-Förderrichtung) zum Be- und Entladen der Kabine. Diese angetriebenen Förderbahnen können, Rollenbahnen, Bandförderer, Kettenförderer, Gliederförderer usw. sein. In der Beschreibung "angetriebene Förderbahnen" genannt.
   - Schwerkraft-Förderbahnen, diese Schwerkraftförderbahnen können, Rollenbahnen, Rutschen, Bandförderer, Kettenförderer usw. sein. In der Beschreibung "Schwerkraft-Förderbahnen" genannt.
   - Angetriebene Förderbahnen und Schwerkraft-Förderbahnen können auch untereinander kombiniert werden, siehe Figur 5e+f.
- Behälter, Paletten oder andere Verpackungen zur Aufnahme von "Gütern bzw. Waren" mit der Möglichkeit der Anbringung einer Ziel-Codierungsvorrichtung, in der Beschreibung kurz "Behälter" genannt.
- Vorrichtung zur 90°-Verschiebung bzw. Drehung der Behälter auf den Förderbahnen zur Förderrichtung, zum Beispiel an Abzweigungen oder in/vor Kabinen, in der Beschreibung "Behälterumsetzer" genannt, siehe Figur 5a+b und 6a+b.
- Förderrahmen zur Aufnahme eines oder mehrerer Paternoster mit mehreren Kabinen. Jeder Förderrahmen kann zur Positionierung des Be- und Entladevorganges über den Hauptantrieb des Aufzuges bewegt werden oder hat einen getrennten Positionier-Antrieb.
   Jede Kabine hat "angetriebene - oder Schwerk-raft-Förderbahnen" und sofern notwendig "Behälterumsetzer".
   In der Beschreibung "Förderrahmen" genannt.
- Code-Lesevorrichtung, für die an den Behältern angebrachten Ziel-Informationen zum Verteilen der Behälter. Diese Code-Lesevorrichtungen können sich in der Kabine, am Förderrahmen, vor den Schachtzugängen oder den für den automatischen Ablauf notwendigen Stelle befinden.

Der Förderrahmen mit Paternosternaufzügen in oder vor dem Schacht kann durch einen festen Rahmen mit darin übereinander und nebeneinander angeordneten Kabinen, wobei der Rahmen, (mit eigenem Antrieb) mit den Kabinen, oder im Rahmen die Kabinen mit eigenem Antrieb, oder Rahmen und Kabinen mit getrennten Antrieben gleichzeitig bewegt werden (zum Positionieren der Kabinen zur Be- bzw. Entladen der Behälter), ersetzt werden. Im Förderrahmen können die übereinander angeordneten Kabinen mit einem eigenen Antrieb in die Be- bzw. Entladeposition gebracht werden. Als Positionier-Antrieb können Ketten- oder Seilantriebe, Zahnstangen bzw. Spindelantriebe, Hydraulikantriebe usw. eingesetzt werden. In der Beschreibung kurz "Rahmenförderer" genannt.
Die Kabinen in Rahmenförderern haben dieselbe Ausrüstung und Aufgabe wie Kabinen von Paternosteraufzügen in Förderrahmen. Je nach Förderrichtung der Förderbahnen in der Kabine, bzw. vor dem Schacht befindet sich der Behälterumsetzer in oder vor den Kabinen bzw. an der für den automatischen Ablauf notwendigen Stelle.

Code-Lesevorrichtungen, für die an den Behältern befestigten Ziel-Informationen, können sich entweder bei der Eingabestelle oder/und an den Behälterumsetzer oder/und an der Uebergabestel1e an die Kabine des Förderrahmens/Rahmenförderers in der Kabine oder an der für den automatischen Ablauf notwendigen Stelle befinden. Diese Förderrahmen/Rahmenförderer können einzeln oder in Gruppen im Schacht oder vor dem Schacht zum Beund Entladen eines Förderrahmens/Rahmenförderers im Schacht eingesetzt werden. Sie können so angeordnet werden, dass sie einzeln oder in Gruppen nur Ein- oder Auslagern oder gleichzeitig Ein- und Auslagern.

Codiereingabe und Lesevorrichtungen können durch Sendeknöpfe, Keyboards usw. ersetzt oder auch kombiniert werden.

Nachfolgend wird ein Ausführungsbeispiel der Erfindung an Hand von Zeichnungen näher erläutert.

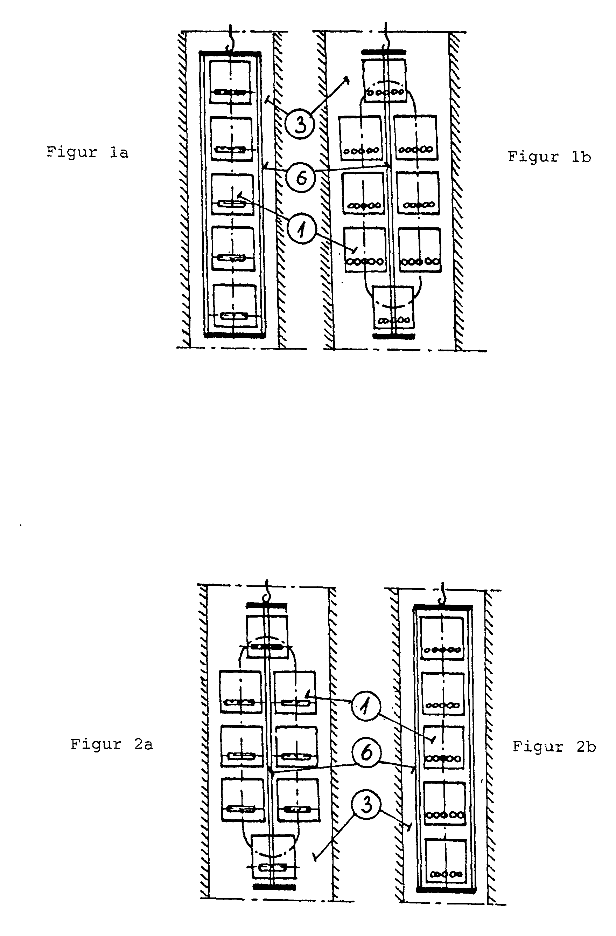

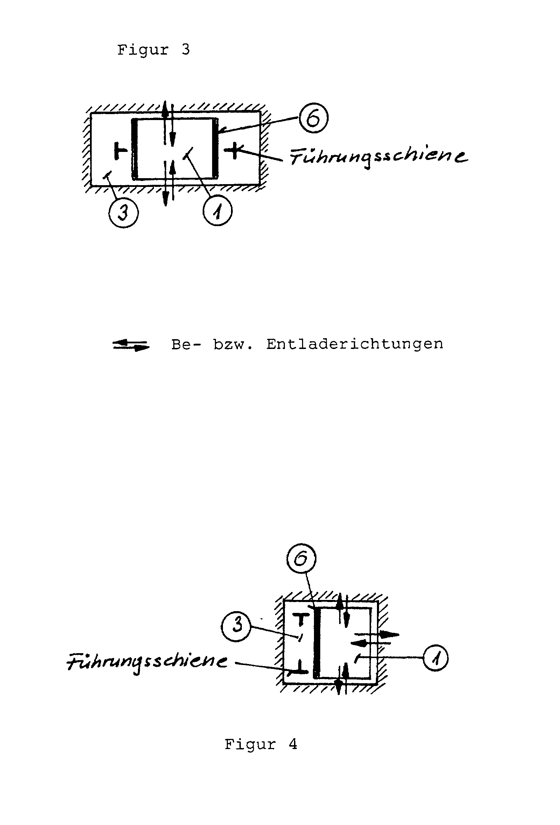

In Figur 1 und 2 ist eine mögliche Anordnung der
- Förderrahmen ⑥ im Schacht ③ mit einem oder mehrerer eingebauter Paternosteraufzügen mit den Kabinen ①.
   Die Kabinen sind ausgerüstet mit angetriebenen oder Schwerkraft-Förderbahnen in beide Förderrichtungen, bei Bedarf mit Code-Lesevorrichtung und Behälterumsetzer. Die Paternosteraufzüge mit Kabinen ① können auch 90° gedreht im Förderrahmen eingebaut werden, normaler Einbau siehe Fig. 1a (Ansicht vom Schachtzugang), und Fig. 1b (Seitenansicht) und 90° gedreht eingebaute Paternoster, siehe Fig. 2a (Ansicht vom Schachtzugang) und Fig. 2b (Seitenansicht).
- Sofern die Förderrahmenhöhe mit den Kabinen ① über zwei Etagen oder mehr reicht, kann die Be- und Entladung der Kabinen mit den Förderbahnen ② vor den Schachtzugängen in zwei oder mehreren Stockwerken gleichzeitig geschehen.
- Der Förderrahmen bzw. Rahmenförderer ⑥ können im Schacht ③ zentralgehängt sein, (Führungsschienen an beiden Seiten), beladen der Kabinen ① von zwei Seiten (Durchladung) möglich, siehe Fig. 3 (Schachtquerschnitt Draufsicht).
- Der Förderrahmen bzw. Rahmenförderer ⑥ können im Schacht ③ rucksackgehängt sein (Führungsschienen an einer Seite des Rahmens), beladen der Kabinen ① kann von 3 Seiten (Durchladung und über Eck) erfolgen, siehe Figur 4 (Schachtquerschnitt Draufsicht)
- Beförderung von Behältern mit unterschiedlicher Zielinformation je Förderrahmen bzw. Rahmenförderer möglich.
- Es können pro Schachtzugang immer mehrere Behälter be- oder entladen werden.
- Be- und entladen des Paternosteraufzuges mit Kabinen ① im Förderrahmen ⑥ ist in einer oder mehreren Ebenen pro Schachtzugang möglich,
   zum Beispiel:
   - Be- und entladen in zwei oder mehreren Ebenen, mit Be- und Entladeförderbahnen ② übereinander, siehe Fig. 5a, 5b, 5c, 5d, 5e und 5f.
   - Auch eine Kombination von Be- und Entladeförderbahnen übereinander und nebeneinander ist möglich.
   - Anordnung eines Paternosters oder eine 90° gedrehten Paternosters (siehe Figuren 1a, 1b, 2a und 2b), vor den Schachtzugängen siehe Figur 7a+b zur schnelleren Be- und Entladung der Paternoster mit Kabinen im Schacht.

In Fig. 5a (Schachtschnitt Seitenansicht) und Fig. 5b (Draufsicht von Fig. 5a) sind dargestellt:
- Förderrahmen ⑥ mit Paternoster für die Aufnahme von mehreren Kabinen ①im Schacht ③.
- Vor dem Schacht befinden sich Förderbahnen ② zur ein- oder zweiseitigen (Durchladung) Beladung der Kabine. Es kann von beiden Seiten be- und entladen, oder von einer Seite nur be- oder entladen werden.
- Die Behälterumsetzer ④ dienen zur besseren Positionierung der Behälter. Vor jedem Behälterumsetzer ④ kann sich eine Ziel-Leseeinrichtung (zur Zielerkennung) befinden. Diese Ziel-Lesevorrichtung gibt die Informationen an die Aufzugssteuerung weiter, die diese Informationen verarbeitet und über Befehle an die Förderbahnantriebe ② und Antriebe der Behälterumsetzer ④, zur optimalen Lade- bzw. Entlade-Positionierung des oder der Behälter und damit ihrer Verteilung, weitergibt.
- Diese Förderbahnen ② mit oder ohne Behälterumsetzer ④ können auch in mehreren Etagen übereinander angeordnet werden um mehrere Kabinen im Schacht in verschiedenen Ebenen gleichzeitig zu be- bzw. entladen.

In Fig. 5c (Schachtschnitt Seitenansicht) und Fig. 5d (Draufsicht von Fig. 5c) sind dargestellt:
- Förderbahnen ② die ohne Behälterumsetzer betrieben werden.

In Fig. 5e (Schachtschnitt Seitenansicht) und Fig. 5f (Draufsicht von Fig.5e) sind dargestellt:
- 90° gedrehter Paternoster im Schacht siehe Figuren 1a, 1b und Figuren 2a, 2b, die automatische Be- bzw. Entladung geschieht über Schwerkraft-Förderbahnen ⑤.

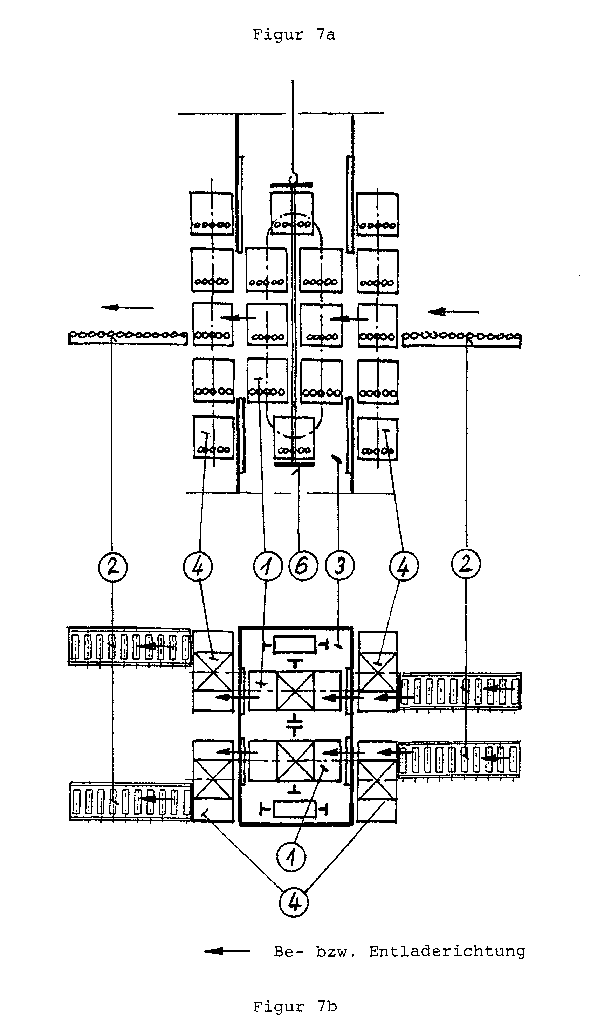

In Figur 6a (Schachtschnitt Seitenansicht) und Figur 6b (Draufsicht von Fig. 6a) sind dargestellt:
- Zwei Förderrahmen ⑥ mit Paternostern und Kabinen ① (können auch nur einer oder mehrere sein) im Schacht ③ mit einseitiger (kann auch zweiseitige / Durchladung sein siehe Figur 3) Be- bzw. Entladung der Kabinen. Sofern von beiden Seiten Be- und Entladen werden kann (Durchladung) kann eine Seit nur für Be- bzw. Entladung der Kabinen verwendet werden.(Siehe Figur 7a+b).
- Die beiden Förderrahmen ⑥ mit Paternosteraufzügen und Kabinen ① können als Gruppensteuerung mit Auf-Abwärtssteuerungen betrieben werden. Vor dem Behälterumsetzer ④ können sich Code-Lesevorrichtungen (zur Zielerkennung) befinden, die diese Information an die Steuerung weitergeben. Diese Aufzugssteuerung verarbeitet diese Informationen und gibt die Befehle an die Antriebe der Förderbahnen ② bzw. Behälterumsetzer ④ weiter, um die Behälter zu den entsprechenden optimalen Ladepositionen und damit Verteilung zu bringen.
- Diese Förderbahnen ② mit den Behälterumsetzern ④ können auch in mehreren Ebenen übereinander angeordnet werden um mehrere Kabinen in verschiedenen Ebenen des Paternosters gleichzeitig zu be- bzw. entladen.
- Bei genügender Förderhöhe des Paternosters mit Kabinen ① kann seine Be- und Entladung auch in zwei oder mehreren Stockwerken des Gebäudes mit Förderbahnen oder Paternostern vor dem Schacht gleichzeitig erfolgen.

In Figur 7a (Schachtschnitt Seitenansicht) und Fig. 7b (Draufsicht von Fig. 7a) sind dargestellt:
- Zwei Förderrahmen ⑥ mit Paternosteraufzügen und Kabinen ① im Schacht (können auch mehrere sein oder nur einer) mit zweiseitiger, mit je einem 90° gedrehten Paternoster ④, vor den Schachtzugängen zur schnelleren Be- bzw. Entladung des Paternosters mit Kabinen ① im Schacht ③. Vor jedem Paternoster ④ vor dem Schacht befindet sich eine angetriebene oder Schwerkraft-Förderbahn ② mit Code-Lesevorrichtun (zur Zielerkennung). Diese Informationen werden an die Aufzugssteuerung weitergegeben, dort verarbeitet und zu optimalen Be- bzw. Entladepositionen der Behälter an die Antriebe der Paternoster mit Kabinen ① im Schacht ③, der Paternoster ④ vor dem Schacht und der Förderbahnen ② weitergegeben.
- Die Paternoster ④ vor dem Schacht werden zur Be- und Entladung des Paternosters mit Kabinen ① im Schacht ③ herangezogen, wobei sie dann zusätzlich noch eine angetriebene Förderbahn ② bekommen können.
- Vor dem Schacht ③ ist eine Kombination mit einem nicht 90° gedrehten Paternoster (gleiche Anordnung wie im Schacht) möglich. Die Paternoster mit Kabinen ① können auch durch Förderbahnen ② mit/ohne Behälterumsetzer ersetzt bzw. kombiniert werden.
- Bei genügender Förderhöhe des Paternosters mit Kabinen ① kann seine Be- und Entladung auch in zwei oder mehreren Stockwerken des Gebäudes gleichzeitig erfolgen.

① Kabinen im Schacht, Teil von ⑥
② Angetriebene Förderbahnen, nach Bedarf mit Ziellesevorrichtung
③ Aufzugsschacht
④ Behälterumsetzer, nach Bedarf mit Ziellesevorrichtung, auch für Umlaufförderer vor dem Schacht zur Sortierung und Pufferung des Be- bzw. Entladegutes
⑤ Schwerkraftförderbahnen
⑥ Förderrahmen bzw. Rahmenförderer im Schacht
⇆ Be- bzw. Entladerichtung

## Patentansprüche

1. Vollautomatische Verteil- und Einsammelanlage in einem mehrstöckigen Gebäude, mit mindestens einem in einem Schacht (3) Verfahrbaren Warenaufzug, der mit Codes versehene Behälter mit Codelesevorrichtungen hat mit Förderbahnen (2) in und vor dem Schacht, und mit einer Steuereinheit, **dadurch gekennzeichnet, dass** der mindestens eine Warenaufzug ein angetriebener Teil eines an sich bekannten weiteren Aufzuges ist.

2. Anlage nach Anspruch 1, **dadurch gekennzeichnet, dass** der Warenaufzug ein automatischer Paternosternosteraufzug ist.

3. Anlage nach Anspruch 1, **dadurch gekennzeichnet, dass** der Warenaufzug ein fester Rahmen mit über- und/oder nebeneinander angeordneten Kabinen (1) ist, und dieser Rahmen zum Positionieren der Kabinen mit einem eigenen Antrieb versehen ist.

4. Anlage nach Anspruch 2, **dadurch gekennzeichnet, dass** der Paternosteraufzug zum Positionieren der Kabinen (1) mit einem eigenen Antrieb versehen ist.

5. Anlage nach Anspruch 4, **dadurch gekennzeichnet, dass** der Paternosteraufzug im Schacht (3) mit einer Kupplung versehen ist, zum Antrieb eines weiteren Paternosteraufzuges vor dem Schacht.

6. Anlage nach einem der Ansprüche 1 bis 5, **dadurch gekennzeichnet, dass** die Förderbahnen der Kabinen (1) im Schacht (3) zum Antrieb der Förderbahnen (2) vor dem Schacht (3) mit einer Kupplung versehen sind.

7. Anlage nach einem der Ansprüche 1 bis 6, **dadurch gekennzeichnet, dass** mehrere Förderbahnen (2) vor dem Schacht (3) übereinander und/oder nebeneinander angeordnet sind.

8. Anlage nach Auspruch 7, **dadurch gekennzeichnet, dass** Förderbahnen (2) und Paternosterförderer vor dem Schacht (3) kombiniert angeordnet sind.

## Claims

1. Fully automatic distribution and collection equipment in a multi-storey building with a minimum of one operational cargo lift within a shaft (3), holding coded containers with a code reading device, with conveyers inside and in front of the shaft and a control unit which is **characterized in that**, the minimum of one cargo lift is a driven part of another, known lift.

2. Equipment according to claim 1 to be **characterized in that**, the cargo lift is an automatic Paternoster-type lift.

3. Equipment according to claim 1 to be **characterized in that**, the cargo lift consists of a solid frame with cabins arranged side by side or one upon the other (1), while the frame is equipped with its own drive for positioning of the cabins.

4. Equipment according to claim 2 to be **characterized in that**, the Paternoster-type lift is equipped with its own drive for the positioning of the cabins (1).

5. Equipment according to claim 4 to be **characterized in that**, the Paternoster-type lift inside the shaft (3) is equipped with a coupling device in order to drive another Paternoster-type lift in front of the lift shaft.

6. Equipment according to one of the claims stated in 1 to 5 **characterized in that**, the conveyers of the cabins (1) inside the shaft (3) are equipped wit h a coupling device in order to drive conveyers (2) in front of the shaft.

7. Equipment according to one of the claims stated in 1 to 6 **characterized in that**, a multitude of conveyers (2) in front of the shaft (3) are arranged one upon the other and/or side by side.

8. Equipment according to claim 7, **characterized in that**, the conveyers (2) and the Paternoster conveyers in front of the shaft (3) have been arranged in a combination thereof.

## Revendications

1. System automatique de distribution et de collection de marchandise pour immeuble à plusieurs étages, contenant au minimum une cage d'ascenseur (3) avec un ascenseur de marchandise avec reconnaissance de code et système de commande intégrés, avec tapis roulant (2) dans et devant la cage d'ascenseur, implique que l'ascenseur de marchandise est entraîné par un ascenseur tiers.

2. Précision du point 1, implique que l'ascenseur de marchandise est un ascenseur Patemos.

3. Précision du point 1, implique que l'ascenseur de marchandise comporte un cadre fixe, avec arrangement des cabines les unes sur les autres ou les unes à cotés des autres (1), et que ce cadre, pour le positionnement des cabines, soit doté d'un entraînement.

4. Précision du point 2, implique que l'ascenseur Patemos est doté d'un system d'entraînement pour le positionnement des cabines (1).

5. Précision du point 4, implique que l'ascenseur Patemos dans la cage d'ascenseur (3) est doté d'un embrayage pour l'entraînement d'un autre ascenseur Patemos devant la cage d'ascenseur.

6. Précision des points 1 à 5, implique que les tapis roulants de la cabine (1) dans la cage d'ascenseur (3), sont connectés à l'entraînement des tapis roulants (2) devant la cage d'ascenseur (3) par un embrayage

7. Précision des points 1 à 6, implique que plusieurs tapis roulants (2) devant la cage d'ascenseur (3) peuvent être positionnés les uns à cotés ou au dessus les uns des autres.

8. Précision du point 7, implique que les tapis roulants (2) et les tapis Paternos devant la cage d'ascenseur (3) sont combinés.
